# EUROPEAN PATENT SPECIFICATION

(11) **EP 4 032 445 B1**
(45) Date of publication and mention of the grant of the patent: **09.08.2023**
(21) Application number: 21153133.0
(22) Date of filing: 25.01.2021
(51) Int. Cl.: A47J 31/44, A47J 31/46

(54) **COFFEE MACHINE DRIP TRAY**
KAFFEEMASCHINENTROPFSCHALE
PLATEAU D'ÉGOUTTAGE DE MACHINE À CAFÉ

(43) Date of publication of application: 27.07.2022
(73) Proprietor: BSH Hausgeräte GmbH, 81739 München (DE)
(72) Inventor: Kirschner, Andreas, 83301 Traunreut (DE); Lemez, Samo, 3327 Smartno ob Paki (SI); Mesko, Ales, 3240 Smarje pri Jelsah (SI); Wiedemann, Johanna, 83236 Übersee (DE)

(56) References cited:
- EP-A1- 2 332 450
- EP-A1- 3 398 488
- DE-B3-102015 208 212
- US-A- 5 245 915

## Description

The present invention relates to a coffee machine in particular to a fully automatic coffee machine with a removable drip tray, a filtration device arranged in the drip tray upstream of a drain device detachably connected to the drip tray of the coffee machine.

Recently, beverage brewing devices which introduce a high degree of automation to the beverage brewing process have been produced. Such automatic coffee machines are known in the state of the art. An automatic coffee machine is a device for the personal and commercial use in which all steps of the coffee preparation cycle occur automatically, especially grinding coffee beans, introduction the ground coffee into the heating chamber, brewing and serving the beverage and also removing the waste water and small particles of coffee automatically by the drainage pipe to the sewage system e.g. sewage installation in a kitchen. The typical coffee machine has a drip tray located at the bottom of the machine and adapted to collect the dripping liquid - water or beverage generated during the brewing process during normal use. The drip tray can be emptied and rinsed by the user. The frequency of this simple hygiene maintenance depends on the use and rest time of the machine but should be carried out frequently enough to avoid bad smells and organic growth. The drip tray is removable for emptying and cleaning manually in comfortable and simple manner or it can be connected with the sewage system, so the waste disposal is performed by the gravity by a drainage pipe outside the machine. The drip tray has a considerable volume therefore can contain additional parts inside such as screening elements increasing the non-clogging time of the drainage system.

The document EP2332450 A1, discloses an automatic beverage machine comprises an equipment unit with a removable drip tray, and is fixed on a receiving device on the equipment unit during a normal operation. The receiving device is arranged in a mounting cavity of the equipment unit. A check valve of a valve plate is arranged in the drip tray. The check valve forms a sealing at a valve seat during removed drip tray condition.

The document US5395515 A, discloses a tray assembly for use in receiving and retaining used moist brewing substances and the like from a beverage brewing apparatus and separating a liquid portion therefrom. The tray assembly is in communication with an entry port which deposits moist brewing substances therein. A drain line in the brewing apparatus carries separated liquids away from said tray assembly. The tray assembly includes a tray body, a liquid separation portion retained in said tray body for drawing off liquids from moist brewing substances, and a controllably sealable tray valve assembly attached to the tray body and operatively engaging the drain line for draining liquids from the tray assembly. A first area in the tray body between the entry port and the liquid separation portion communicates with the entry port and defines a receiving and retaining space. A second area in the tray body between the liquid separating portion and the valve assembly communicates with the tray valve assembly and defines a liquid collection space. Drained brewing substance is retained in the receiving and retaining space for removal at a later time. Liquid drawn off of the brewing substance into the liquid collection space flows from the tray assembly out through the tray valve assembly when engaged with the drain line.

The document DE102015208212 B3 discloses a beverage dispenser with a removable drip tray, a screening device arranged in the drip tray upstream of a drainage device and a drainage and / or drainage container. According to the invention, at least one partial region of an active surface of the screening device can be arranged in an outlet region of the expansion and/or drainage container. This ensures, in particular long, no-clogging operation without additional cleaning components and thus improves the cleaning effort with simple handling by means of a cost-effective solution.

The document EP3398488 A1 discloses a fully automatic coffee machine having a water tank, a pump, a brewing unit, a heater, a steam relief unit and a drainage system where a drip tray is equipped with a multi-function element, whereas the multi-function element contains a steam guiding part and a strainer part where said multi-function element is detachably connected to the drip tray of the coffee machine. The present invention provides a two component multi-function element which is responsible for reducing the steam and moisture volume inside the coffee machine body and also which prevents coffee particles from clogging the drainage system of the coffee machine.

For a user's convenience, the automatic coffee machine often has a drainage device, as a drip tray, that is directly connected to a house drain system. So, this is very important to equip the coffee machine with a filter system that prevents from clogging the house drain system by particles of coffee, milk and mostly of coffee powder out of coffee machine. So far fine metal sieve has been usually used for this application, that is relatively expensive to produce. Despite the coffee machine has the filter system, it happens that the user forget to properly place again a detachably mounted parts of the system, that was taken out e.g. for cleaning. Presented solutions do not provide a system, which would protect the coffee machine and finally the house drain system from operating of the coffee machine in the mentioned above conditions.

The object of the present invention is to eliminate the drawbacks of the known coffee machines with the filtration system and with the drainage system connected to the house drain system, and to prevent the house drain system from clogging by particles of coffee, milk and mostly of coffee powder out of coffee machine, waste from brewing coffee. Another object of the invention is further development of the filtration system and reducing production costs.

In accordance with the present invention, there is provided a coffee machine as defined in claim 1.

An automatic coffee machine is a device for the personal and commercial use in which all steps of the coffee preparation cycle occur automatically, especially grinding coffee beans, introduction the ground coffee into the heating chamber, brewing and serving the beverage and also removing the waste water and small particles of coffee automatically by the drainage pipe to the house drain system e.g. sewage installation in a kitchen. The typical coffee machine has a drip tray located at the bottom of the machine and adapted to collect the dripping liquid - water or beverage generated during the brewing process during normal use. The drip tray would be connected to the house drain system, so the waste disposal is performed by the gravity by a drainage pipe outside the machine. In the reason to prevent from clogging the drain system, the drip tray has a filter device inside, such as screening elements for stopping the waste participle in the drip tray. Without properly mounted the filter device doesn't work, so waste from brewing coffee could flow in to the house drain system and consequently clog it, what can cause serious and costly failure of the sewage system in the house. For instance, it can happen when the user forgets properly to put a detachably mounted parts back on, that was taken out e.g. for cleaning. For this reason the coffee machine comprises a system which secures an operation of the coffee machine without a properly installed the covering element in the drip tray, wherein the system is equipped with a closing element which cooperates with the covering element. It provides the system that stops waste flow out of the coffee machine, when the covering element is not properly installed. The positive effect is that the house drain system is protected from clogging. Moreover presented solution is easy to implement in the production.

According to the invention, the closing element closes the opening of the drainage device when the covering element is not properly installed in the drip tray, and the closing element is engaged with the covering element to hold open the opening of the drainage device when the covering element is properly installed in the drip tray. The closing element is held in the open position by the covering element when the covering element is properly mounted. So, the system doesn't need any additional parts to work in order, therefore is cheap and easy to produce.

In a preferred embodiment the closing element is pivotally mounted in the drip tray above the opening, for rotation the closing element about a horizontal axis. The closing element is provided with a lever arm which is engaged with a cavity of the covering element in order to hold open the opening when the covering element is properly mounted. The lever arm is located above the horizontal axis, and together with the closing element form a cross-sectional L-shaped part. The positive effect is that it provides simple and reliable solution for closing the opening of the drainage system. Advantageously, because of the gravity the closing element provided with the said lever arm has tendency to automatically close the opening when is not engaged with the covering element.

Preferable the filtration means comprises a depression that is arranged in the drip tray and is fluidly communicated with the drainage device via the opening, wherein the depression is covered by the covering element that is equipped with a sieving portion includes a sieve with a plurality of holes. Advantageously, the covering element has the sieving portion with a sloping working surface that slopes downward from a periphery of the covering element to a rear portion of the covering element. The positive effect is that the covering element is a sieve that is cheap and simple to make by molding injection technology instead of high accurate sieve. Furtherly, the covering element in accordance to the invention has a concave shape like a shovel, so all sediments are collected on the working surface of it. This enables, that user can easy remove majority of sediment from the coffee machine and recycles it, instead remove it into sewer.

In the another preferred embodiment the filtration means comprises the depression that is provided with at least one a settling device formed by a settling basin and a weir suitable for contacting liquid flowing downward to the drainage system. The positive is that the covering element and the drip tray with the depression provided with the settling basin and the weir are easy to produce as a plastic part in molding injection technology, so they are cheap to produce. Advantageously all waste from brewing coffee stay in the settling device and can be recycled. The depression can be provided with more than one settling device, which are connected in series.

Preferable the covering element has a vertical head wall and at least one vertical baffle arranged upstream of the drainage system. The positive effect is that the vertical head wall and the vertical baffle have a positive effect primarily on reducing and stabilizing the flow.

In addition in that preferred embodiment the vertical head wall is provided with series of recesses which are regularly distributed in a lower portion of the said vertical head wall along it lower edge, and in that the vertical baffle extends below the weir to create a gap for slowing down water flow rate.

Preferable, the vertical head wall and the vertical baffle have a circular arc-shaped cross section, that is convex in the direction opposite to the drainage device in order to provide undisturbed water flow towards the drainage device.

Preferable, the weir has a circular arc-shaped cross section and forms with the vertical baffle the gap with substantially the same width along the length of the vertical baffle and in that the ends of the weir are adjacent to a rear wall of the drip tray. The positive effect is that the water flows as wide as possible, which ensures a large capacity of the settling device.

In the another preferred embodiment the closing element is kept in the open position by the lever arm of the closing element that is hold in vertical position by the cavity of the covering element. This solution ensures that the lever is kept securely in the open position when the covering element is properly placed and the opening of the drainage device is opened. Preferable the lever arm is so long that its end protrudes above the covering element to facilitate pivoting it to a vertical position and resting against the cavity of the covering element.

Preferable the coffee machine is provided with means that indicate exceeding maximum accepted level of the water in the drip tray. Advantageously the drip tray is provided with a float indicator for sensing the water level in the drip tray and informing a user about exceeding of a certain the water level. The user is informed when the water level in the drip tray is exceeded, it may happen for instance when the covering element is not placed in right position in the drip tray, because in this case the drainage device is closed by the closing element closes. In this case the user removes the drip tray from the coffee machine, and notices that the lid is incorrectly placed or there is no it. This causes that the user can fix this irregularity.

The features of the invention are set forth in the appended claims. The invention itself, however, may be best understood by reference to the following detailed description of the invention, which describes an exemplary embodiment of the invention, taken in conjunction with the accompanying drawings.

Further benefits and advantages of the present invention will become apparent after a careful reading of the detailed description with appropriate reference to the accompanying drawings.

In the drawings:
Fig. 1 shows a first embodiment of a coffee machine drip tray of the invention in an isometric view.
Fig. 2 shows a first embodiment of a coffee machine drip tray of the invention in an isometric view.
Fig. 3 shows a second embodiment of a coffee machine drip tray of the invention in an isometric view.
Fig. 4 shows cross sectional view of a second embodiment of a coffee machine drip tray of the invention.

In the following description of the preferred embodiments of the present invention, similar identical reference numbers designate identical or comparable components.

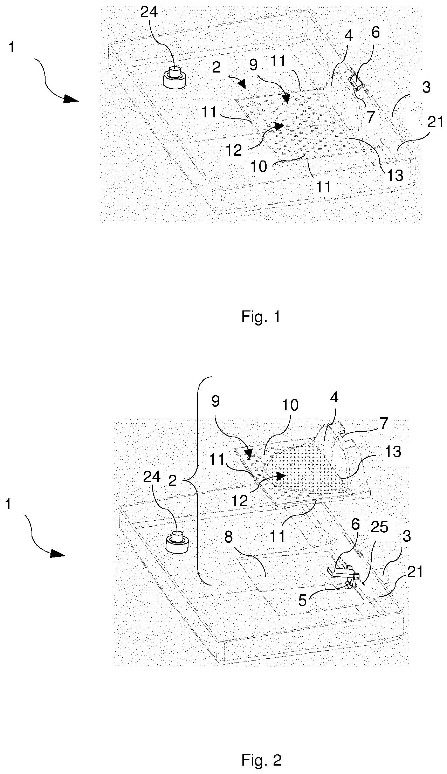

Fig. 1 and Fig.2 show a first embodiment of a coffee machine drip tray 1 of the invention in an isometric view. The drip tray 1 is a removable part of a coffee machine in particular a fully automatic coffee machine arranged for easy cleaning collected waste from brewing coffee. The coffee machine (not shown on this figure) is usually also provided with a water tank, a pump, a brewing unit, a heater. The drip tray 1 has a filtration means 2 that comprises a depression 8 which is arranged in the bottom portion, a covering element 4 arranged upstream of the drainage device 3 which covers the depression 8. The drip tray has a drainage device 3 that is fluidly communicated with the depression 8 via the opening 19 that is arranged in a rear wall 21 of the drip tray 1. The covering element 4 is detachably connected to the drip tray 1. The covering element 4 is equipped with a sieving portion 9 with a plurality of holes 10. The sieving portion 9 has a sloping working surface 12 that slopes downward from a periphery 11 of the covering element 4 to a rear portion 13 of the covering element 4. The drainage device 3 fluidly connects the drip tray 1 with the house drain or sewage system (not shown on this figure). The drip tray 1 has a system which secures an operation of the coffee machine without a properly installed the covering element 4 in the drip tray 1. The system is equipped with a closing element 5 which cooperates with the covering element 4. The closing element 5 is pivotally mounted in the drip tray 1 above the opening 19 for rotation it about a horizontal axis 25. The closing element 5 is provided with a lever arm 6, that forms substantially right angle with the closing element 5. The covering element 4 is provided with a cavity 7 that receives a free end of the lever arm 6.

Fig. 1 shows the case when the covering element 4 is properly placed in the drip tray 1. In that case the lever arm 6 is in a vertical position and adheres to a rear wall 21 of the drip tray 1 where is held in that position by the cavity 7, what causes that the closing element 5 (not shown on this figure) is rotated about the axis 25 and opens the opening 19 (not shown on this figure) of the drainage device 3. The free end of the lever arm 6 partially protrudes above the cavity 7 in order to make it easier to move the lever arm 6 to the vertical position and supporting it by the cavity 7. The bottom portion of the drip tray 1 is equipped with a float water level indicator 24 to inform the user about exceeding of a certain the water level in the drip tray 1. The sieving part 9 of the covering element 4 has a concave shape like a shovel, so that the coffee brewing waste are collected on the covering element 4 and gradually covers the sieving portion 9. When all holes 10 has been covered the water level rises quickly and the user is informed by the float water level indicator 24 about the necessity of cleaning the drip tray 1. The shovel like shape of the covering element 4 allow to easy remove waste.

Fig. 2 shows the case when the covering element 4 is not properly placed in the drip tray 1. In that case the lever arm 6 is not supported by the cavity 7, therefore the gravity causes the lever arm 6 with the closing element 5 rotates about the horizontal axis 25 and the closing element 5 closes the opening 19 of the drainage device 3. Closing the opening 19 causes that the water level rises quickly in the drip tray 1. When the water level exceeds the certain level in the drip tray 1, the float water level indicator 24 informs the user about the need to clean the drip tray 1.

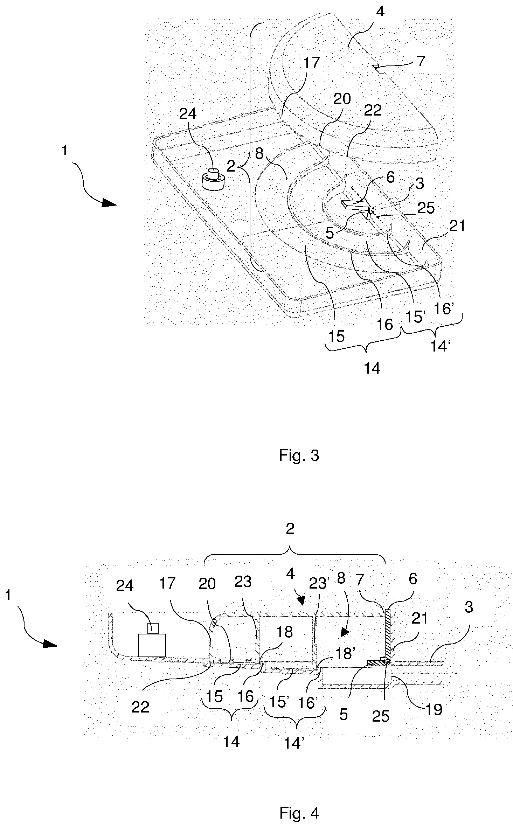

Fig. 3 and Fig 4. show a second embodiment of a coffee machine drip tray 1 of the invention. The drip tray 1 is a removable part of a coffee machine in particular a fully automatic coffee machine arranged for easy cleaning collected waste from brewing coffee. The coffee machine (not shown on this figure) is usually also provided with a water tank, a pump, a brewing unit, a heater. The drip tray 1 has a filtration means 2 comprising the depression 8 that is provided with two settling devices 14, 14' formed by a two settling basins 15, 15' and two weirs 16, 16' suitable for contacting liquid flowing downward to the drainage system 3 that is formed in the drip tray 1, and a covering element 4 arranged upstream of the drainage device 3 which covers the depression 8. The drainage device 3 fluidly connects the drip tray 1, especially the depression 8 with the house drain or sewage system (not shown on this figure). via the opening 19 that is arranged in a rear wall 21 of the drip tray 1. The covering element 4 is detachably connected to the drip tray. Furtherly, the drip tray 1 is provided with a system which secures an operation of the coffee machine without a properly installed the covering element 4 in the drip tray 1. The system is equipped with a closing element 5 which cooperates with the covering element 4. The closing element 5 is pivotally mounted for rotation it about a horizontal axis 25 in the drip tray 1 above the opening 19. The closing element 5 is provided with a lever arm 6, that forms substantially right angle with the closing element 5. The covering element 4 is provided with a cavity 7 that receives a free end of the lever arm 6. The bottom portion of the drip tray 1 is equipped with a float water level indicator 24 to inform the user about exceeding of a certain the water level in the drip tray 1. Additionally the covering element 4 has a vertical head wall 17 and two vertical baffles 23,23' arranged upstream of the drainage system 3. The vertical head wall 17 is provided with sixteen shallow recesses 20 which are regularly distributed in a lower portion of the said vertical head wall 17 and along it lower edge 22, and the vertical baffles 23,23' extend below the respective weirs 16,16" to create gaps 18, 18' for slowing down water flow rate. The vertical head wall 17 and the vertical baffles 23, 23' have a circular arc-shaped cross section, that are convex in the direction opposite to the drainage device 3. The weirs 16, 16' have a circular arc-shaped cross section and forms with the vertical baffles 23, 23' two gaps 18, 18' with substantially the same width along the length of the vertical baffles 23, 23'. The ends of the weirs 16, 16' are adjacent to a rear wall 21 of the drip tray 1.

Fig. 3 shows the second embodiment, in the case when the covering element 4 is not properly placed in the drip tray 1. In that case the lever arm 6 is not supported by the cavity 7, therefore the gravity causes the lever arm 6 with the closing element 5 rotates about the horizontal axis 25 and the closing element 5 closes the opening 19 of the drainage device 3. Closing the opening 19 causes that the water level rises quickly in the drip tray 1. When the water level exceeds the certain level in the drip tray 1, the float water level indicator 24 informs the user about the need to clean the drip tray 1.

Fig. 4 shows the second embodiment of the invention in cross sectional view, in the case when the covering element 4 is properly placed in the drip tray 1. In that case the lever arm 6 is in a vertical position and adheres to a rear wall 21 of the drip tray 1 where is held in that position by the cavity 7, what causes that the closing element 5 is rotated about the axis 25 and opens the opening 19 of the drainage device 3. So, filtered by the filtration means 2 water that will be in the drip tray 1, flows without any obstacles to the sewage/drain house system. The free end of the lever arm 6 partially protrudes above the cavity 7 in order to make it easier to move the lever arm 6 to the vertical position and supporting it by the cavity 7. The water flow is slowed down by the filtration system 2, so waste from brewing coffee remain in settling basins 15, 15' and water can flow over weirs 16, 16' into the drainage device 3 through the opening 19 and then furtherly to the house drain system. The bottom portion of the drip tray 1 is equipped with a float water level indicator 24, so when the filtration means 2 becomes clogged the waste from brewing coffee, the water lever quickly exceeds the certain level in the drip tray 1, the float water level indicator 24 informs the user about the need to clean the drip tray 1.

### List of reference signs

1 drip tray
2 filtration mean
3 drainage device
4 covering element
5 closing element
6 lever arm
7 cavity
8 depression
9 sieving portion
10 hole
11 periphery
12 working surface
13 rear portion
14 settling device
15 settling basin
16 weir
17 head wall
18 gap
19 opening
20 recess
21 rear wall
22 lower edge
23 vertical baffle
24 float water level indicator
25 horizontal axis

## Claims

1. A coffee machine, in particular a fully automatic coffee machine with a water tank, a pump, a brewing unit, a heater, a removable drip tray (1) with a filtration means (2) and a drainage device (3) with an opening (19), wherein the filtration means (2) is arranged in the drip tray (1) upstream of the drainage device (3) and the filtration means (2) comprises a covering element (4) that is detachably connected to the drip tray (1), wherein the coffee machine comprises a system which secures an operation of the coffee machine without a properly installed covering element (4) in the drip tray (1), wherein the system is equipped with a closing element (5) which cooperates with the covering element (4), **characterized in that** the closing element (5) closes the opening (19) of the drainage device (3) when the covering element (4) is not properly installed in the drip tray (1), and **in that** the closing element (5) is engaged with the covering element (4) to hold open the opening (19) of the drainage device (3) when the covering element (4) is properly installed in the drip tray (1).

2. The coffee machine according to claim 1, **characterized in that** the closing element (5) is pivotally mounted in the drip tray (1) above the opening (19) for rotation the closing element (5) about a horizontal axis (25), and the closing element (5) is provided with a lever arm (6) which is engaged with a cavity (7) of the covering element (4) in order to hold open the opening (19).

3. The coffee machine according to any of claims 1 to 2, **characterized in that** the filtration means (2) comprises a depression (8) that is arranged in the drip tray (1) and that is fluidly communicated with the drainage device (3) via the opening (19), wherein the depression (8) is covered by the covering element (4) that is equipped with a sieving portion (9) which includes a sieve with a plurality of holes (10)

4. The coffee machine according to claim 3, **characterized in that** the covering element (4) has the sieving portion (9) with a sloping working surface (12) that slopes downward from a periphery (11) of the covering element (4) to a rear portion (13) of the covering element (4).

5. The coffee machine according to any of claims 1 to 2, **characterized in that** the filtration means (2) comprises a depression (8) that is provided with at least one settling device (14) formed by a settling basin (15) and a weir (16) suitable for contacting liquid flowing downward to the drainage system (3).

6. The coffee machine according to claim 5, **characterized in that** the covering element (4) has a vertical head wall (17) and at least one vertical baffle (23) arranged upstream of the drainage system (3).

7. The coffee machine according to claim 6, **characterized in that** the vertical head wall (17) is provided with series of recesses (20) which are regularly distributed in a lower portion of the said vertical head wall (17) along it lower edge (22), and **in that** the vertical baffle (23) extends below the weir (16) to create a gap (18) for slowing down water flow rate.

8. The coffee machine according to claims 5 to 7, **characterized in that** the vertical head wall (17) and the vertical baffle (23) have a circular arc-shaped cross section, that is convex in the direction opposite to the drainage device (3).

9. The coffee machine according to claims 5 to 8, **characterized in that** the weir (16) has a circular arc-shaped cross section and forms with the vertical baffle (23) the gap (18) with substantially the same width along the length of the vertical baffle (23) and **in that** the ends of the weir (16) are adjacent to a rear wall (21) of the drip tray (1).

10. The coffee machine according to any of preceding claims, **characterized in that** the closing element (5) is kept in the open position by the lever arm (6) of the closing element (5) that is hold in vertical position by the cavity (7) of the covering element (4).

11. The coffee machine according to any of preceding claims, **characterized in that** the coffee machine is provided with means that indicate exceeding max accepted level of the water in the drip tray (1).

12. The coffee machine according to according to any of preceding claims, **characterized in that** the drip tray (1) is provided with a float water level indicator (24) for sensing the water level in the drip tray (1) and informing a user about exceeding of a certain the water level in the drip tray (1).

## Patentansprüche

1. Kaffeemaschine, insbesondere Kaffeevollautomat, mit einem Wassertank, einer Pumpe, einer Brüheinheit, einer Heizvorrichtung, einer abnehmbaren Abtropfschale (1) mit einem Filtermittel (2) und einer Ablaufvorrichtung (3) mit einer Öffnung (19), wobei das Filtermittel (2) in der Abtropfschale (1) stromaufwärts von der Ablaufvorrichtung (3) angeordnet ist und ein Abdeckelement (4) umfasst, das lösbar mit der Abtropfschale (1) verbunden ist, wobei die Kaffeemaschine ein System umfasst, das einen Betrieb der Kaffeemaschine ohne ein ordnungsgemäß eingesetztes Abdeckelement (4) in der Abtropfschale (1) gewährleistet, wobei das System mit einem Schließelement (5) ausgestattet ist, das mit dem Abdeckelement (4) zusammenwirkt,
**dadurch gekennzeichnet, dass** das Schließelement (5) die Öffnung (19) der Ablaufvorrichtung (3) verschließt, wenn das Abdeckelement (4) nicht ordnungsgemäß in der Abtropfschale (1) eingesetzt ist, und das Abdeckelement (4) in Eingriff nimmt und so die Öffnung (19) der Ablaufvorrichtung (3) offenhält, wenn das Abdeckelement (4) ordnungsgemäß in der Abtropfschale (1) eingesetzt ist.

2. Kaffeemaschine nach Anspruch 1, **dadurch gekennzeichnet, dass** das Schließelement (5) oberhalb der Öffnung (19) zum Drehen um eine horizontale Achse (25) schwenkbar in der Abtropfschale (1) angebracht und mit einem Hebelarm (6) versehen ist, der in eine Aussparung (7) des Abdeckelements (4) eingreift und so die Öffnung (19) offenhält.

3. Kaffeemaschine nach einem der Ansprüche 1 bis 2, **dadurch gekennzeichnet, dass** das Filtermittel (2) eine Vertiefung (8) umfasst, die in der Abtropfschale (1) angeordnet und über die Öffnung (19) mit der Ablaufvorrichtung (3) fluidverbunden ist, wobei die Vertiefung (8) mit dem Abdeckelement (4) abgedeckt ist, das mit einem Siebabschnitt (9) versehen ist, der ein Sieb mit mehreren Löchern (10) umfasst.

4. Kaffeemaschine nach Anspruch 3, **dadurch gekennzeichnet, dass** das Abdeckelement (4) den Siebabschnitt (9) mit einer geneigten Arbeitsfläche (12) aufweist, die von einem Rand (11) des Abdeckelements (4) zu einem hinteren Abschnitt (13) des Abdeckelements (4) hin nach unten abfällt.

5. Kaffeemaschine nach einem der Ansprüche 1 bis 2, **dadurch gekennzeichnet, dass** das Filtermittel (2) eine Vertiefung (8) umfasst, die mit mindestens einer Absetzvorrichtung (14) versehen ist, welche von einem Absetzbecken (15) und einem Überlaufelement (16) gebildet wird, die sich für den Kontakt mit Flüssigkeit eignen, welche nach unten zu dem Ablaufsystem (3) abläuft.

6. Kaffeemaschine nach Anspruch 5, **dadurch gekennzeichnet, dass** das Abdeckelement (4) eine vertikale Kopfwand (17) und mindestens eine vertikale Leitplatte (23) aufweist, die stromaufwärts vom Ablaufsystem (3) angeordnet sind.

7. Kaffeemaschine nach Anspruch 6, **dadurch gekennzeichnet, dass** die vertikale Kopfwand (17) mit einer Reihe von Vertiefungen (20) versehen ist, die in einem unteren Abschnitt der vertikalen Kopfwand (17) an ihrem unteren Rand (22) entlang gleichmäßig verteilt sind, und die vertikale Leitplatte (23) unter dem Überlaufelement (16) entlang verläuft und so einen Spalt (18) zum Verringern des Wasserdurchflusses erzeugt.

8. Kaffeemaschine nach Anspruch 5 bis 7, **dadurch gekennzeichnet, dass** die vertikale Kopfwand (17) und die vertikale Leitplatte (23) einen kreisrunden, bogenförmigen Querschnitt aufweisen, der in der Ablaufvorrichtung (3) entgegengesetzter Richtung konvex ist.

9. Kaffeemaschine nach Anspruch 5 bis 8, **dadurch gekennzeichnet, dass** das Überlaufelement (16) einen kreisrunden, bogenförmigen Querschnitt aufweist und mit der vertikalen Leitplatte (23) den Spalt (18) von im Wesentlichen der gleichen Breite entlang der Länge der vertikalen Leitplatte (23) bildet und die Enden dem Überlaufelements (16) an eine hintere Wand (21) der Abtropfschale (1) angrenzen.

10. Kaffeemaschine nach einem der vorhergehenden Ansprüche, **dadurch gekennzeichnet, dass** das Schließelement (5) von seinem Hebelarm (6) in der offenen Position gehalten wird, der durch die Aussparung (7) des Abdeckelements (4) in vertikaler Position gehalten wird.

11. Kaffeemaschine nach einem der vorhergehenden Ansprüche, **dadurch gekennzeichnet, dass** die Kaffeemaschine mit einem Mittel versehen ist, das ein Überschreiten des maximal zulässigen Wasserstands in der Abtropfschale (1) anzeigt.

12. Kaffeemaschine nach einem der vorhergehenden Ansprüche, **dadurch gekennzeichnet, dass** die Abtropfschale (1) mit einem Schwimmer-Wasserstandsanzeiger (24) zum Erkennen des Wasserstands in der Abtropfschale (1) und Informieren eines Benutzers über das Überschreiten eines bestimmten Wasserstands in der Abtropfschale (1) versehen ist.

## Revendications

1. Machine à café, en particulier machine à café entièrement automatique comprenant un réservoir d'eau, une pompe, une unité de percolation, un dispositif de chauffe, un plateau d'égouttage démontable (1) comprenant un moyen de filtrage (2) et un dispositif de drainage (3) doté d'un orifice (19), dans laquelle le moyen de filtrage (2) se trouve dans le plateau d'égouttage (1) en amont du dispositif de drainage (3) et le moyen de filtrage (2) comprend un élément de recouvrement (4) relié à démontage au plateau d'égouttage (1), dans laquelle la machine à café comprend un système qui fixe le fonctionnement de la machine à café sans installation convenable d'un élément de recouvrement (4) dans le plateau d'égouttage (1), dans laquelle le système est équipé d'un élément de fermeture (5) qui coopère avec l'élément de recouvrement (4), **caractérisée en ce que** l'élément de fermeture (5) ferme l'orifice (19) du dispositif de drainage (3) quand l'élément de recouvrement (4) n'est pas convenablement installé dans le plateau d'égouttage (1), et **en ce que** l'élément de fermeture (5) entre en prise avec l'élément de recouvrement (4) pour maintenir l'orifice (19) du dispositif de drainage (3) ouvert quand l'élément de recouvrement (4) est convenablement installé dans le plateau d'égouttage (1).

2. Machine à café selon la revendication 1, **caractérisée en ce que** l'élément de fermeture (5) est assemblé par pivotement dans le plateau d'égouttage (1) au-dessus de l'orifice (19) pour la rotation de l'élément de fermeture (5) autour d'un axe horizontal (25), et l'élément de fermeture (5) est doté d'un bras de levier (6) lequel est mis en prise avec une cavité (7) de l'élément de recouvrement (4) afin de maintenir l'orifice (19) ouvert.

3. Machine à café selon l'une quelconque des revendications 1 à 2, **caractérisée en ce que** le moyen de filtrage (2) comprend un affaissement (8) se trouvant dans le plateau d'égouttage (1) en communication fluidique avec le dispositif de drainage (3) par le biais de l'orifice (19), dans laquelle l'affaissement (8) est recouvert par l'élément de recouvrement (4) équipé d'une partie faisant tamis (9) qui comprend un tamis présentant une pluralité de trous (10).

4. Machine à café selon la revendication 3, **caractérisée en ce que** l'élément de recouvrement (4) a la partie formant tamis (9) avec une surface opérationnelle en pente (12) qui descend d'une périphérie (11) de l'élément de recouvrement (4) vers une partie arrière (13) de l'élément de recouvrement (4).

5. Machine à café selon l'une quelconque des revendications 1 à 2, **caractérisée en ce que** le moyen de filtrage (2) comprend un affaissement (8) muni d'au moins un dispositif de décantation (14) formé par un bassin de décantation (15) et un déversoir (16) prévu pour entrer en contact avec du liquide s'écoulant vers le bas vers le système de drainage (3).

6. Machine à café selon la revendication 5, **caractérisée en ce que** l'élément de recouvrement (4) présente une paroi de tête verticale (17) et au moins un déflecteur vertical (23) agencés en amont du système de drainage (3).

7. Machine à café selon la revendication 6, **caractérisée en ce que** la paroi de tête verticale (17) est munie d'une série de cuvettes (20) régulièrement distribuées dans une partie inférieure de ladite paroi de tête verticale (17) le long de son bord inférieur (22), et **en ce que** le déflecteur vertical (23) s'étend en dessous du déversoir (16) pour créer un écart (18) pour ralentir le débit de l'eau.

8. Machine à café selon les revendications 5 à 7, **caractérisée en ce que** la paroi de tête verticale (17) et le déflecteur vertical (23) présentent une coupe arquée circulaire, laquelle est convexe dans la direction opposée au dispositif de drainage (3).

9. Machine à café selon les revendications 5 à 8, **caractérisée en ce que** le déversoir (16) présente une coupe arquée circulaire et forme avec le déflecteur vertical (23) l'écart (18) ayant substantiellement la même largeur sur la longueur du déflecteur vertical (23) et **en ce que** les extrémités du déversoir (16) sont adjacentes à une paroi arrière (21) du plateau d'égouttage (1).

10. Machine à café selon l'une quelconque des revendications précédentes, **caractérisée en ce que** l'élément de fermeture (5) est gardé dans la position ouverte par le bras de levier (6) de l'élément de fermeture (5) maintenu en position verticale par la cavité (7) de l'élément de recouvrement (4).

11. Machine à café selon l'une quelconque des revendications précédentes, **caractérisée en ce que** la machine à café est munie d'un moyen qui indique le dépassement d'un niveau maximum admissible de l'eau dans le plateau d'égouttage (1).

12. Machine à café selon l'une quelconque des revendications précédentes, **caractérisée en ce que** le plateau d'égouttage (1) est muni d'un indicateur de niveau d'eau flottant (24) pour détecter le niveau de l'eau dans le plateau d'égouttage (1) et informer un utilisateur quant au dépassement d'un certain niveau d'eau dans le plateau d'égouttage (1).
